# EUROPEAN PATENT APPLICATION

(11) **EP 4 726 338 A1**
(43) Date of publication of application: **15.04.2026**
(21) Application number: 25206958.8
(22) Date of filing: 06.10.2025
(51) Int. Cl.: G01F 22/00, G06T 7/62, G01F 17/00, G01F 23/292

(54) **SYSTEM AND METHOD FOR MONITORING THE FILLING STATUS OF A WASTE CONTAINER**

(30) Priority: 08.10.2024 IT 202400022326
(71) Applicant: Iotilize.Me S.r.l., 00152 Roma (IT)
(72) Inventor: GIACCONE, Matteo, Roma (IT); GOBERTI, Francesco, Roma (IT); CASTELLANO, Francesco, Roma (IT)
(74) Representative: Lunati & Mazzoni S.r.L.

(57) **Abstract**

A computer-implemented process is provided for monitoring the filling status of a waste container comprising: defining a three-dimensional reference system (2a), defining an abscissa (X), a ordinate (Y), and a depth (Z), integral with a waste container (2) containing waste (10) and delimited by at least one bottom wall (20) aligned with a bottom plane (X, Y); acquiring a three-dimensional image (10') of the waste (10) by means of an optical sensor (3) within a viewing cone (30) developing around an acquisition direction (3a) transverse to the bottom plane (X, Y); virtually scanning the image (10') with a digital, two-dimensional and flat grid (11) transverse to the acquisition direction (3a), defining a plurality of neatly distributed zones (11a); identifying, when present, at least one contact point (p, pi, pf) for each zone (11a) between the grid (11) and the image (10') such that the contact point (p, pi, pf) defines its own local coordinates (Xp, Xpi, Xpf, Yp, Ypi, Ypf, Zp, Zpi, Zpf) in the reference system (2a); calculating the overall waste volume occupied by the waste (10) in the container (2) based on the contact points (p, pi, pf) with respect to the reference system (2a); comparing the overall waste volume with a predetermined threshold value; issuing a warning when the overall waste volume reaches and/or exceeds the predetermined threshold value.

## Description

The present invention relates to a system and method for monitoring the filling status of a waste container of the type specified in the preamble of claim 1.

In particular, the present invention concerns a system and method for monitoring the filling status of a fixed or, preferably, mobile type waste container, so as to enable optimised management of the disposal cycles of the waste contained therein.

As is known, there are devices on the market suitable for enabling the monitoring of the filling status of waste containers, to facilitate, for example, the collection of waste from containers especially in non-urban areas.

In particular, said devices are overall adapted to measure the filling level by means of optical-type instruments. They are mainly adapted to communicate, for example to an external operator, the fullness level of a container, so that it is possible to empty it only when the container is in a specific condition, especially if full, allowing the operator to be alerted for intervention only when it is necessary to act on the container.

For example, patent application US-A-2008/0126473 describes a system for assessing the filling level of containers equipped with three gauges positioned parallel to the ground and adapted to verify whether the content has reached the level of the gauge. Said solution is very complex and requires the implementation of containers that are expensive.

Patent application WO-A-2018/073075 instead describes containers combined with fullness level readers attached to lamp posts, close to the containers themselves. Said system does not have the costs of the previous ones; however, it operates exclusively for containers close to lamp posts.

Patent application WO-A-2019/040946 instead describes waste containers equipped with a laser sensor for the filling level inside the lid of the container itself. These sensors can only be used in containers equipped with a lid. Furthermore, the sensor is at risk of damage from the opening and closing of the container.

The prior art described comprises some significant drawbacks.

In fact, overall, the known devices are expensive and require the implementation of distributed systems having various components cooperating with one another. In addition, the known devices are applicable only under particular conditions, for example in circumstances in which the containers have a lid, or else when the containers are associated with poles or other elements, as indicated for the solutions described in the cited patent applications.

In this context, the technical task underlying the present invention is to devise a system and method for monitoring the filling status of a waste container capable of substantially overcoming at least part of the aforementioned drawbacks. Within said technical task, an important object of the invention is to provide a system and method for monitoring the filling status of a waste container that allows to reduce the number of components required for monitoring the container and therefore the overall cost of the system.

Another important object of the invention is to implement a system and method for monitoring the filling status of a waste container that allows to increase the accuracy in the assessment of the filling status of the container despite the above-mentioned limited complexity of the system.

The technical task and the specified objects are achieved by a system and method for monitoring the filling status of a waste container as claimed in the annexed claim 1.

Preferred technical solutions are highlighted in the dependent claims.

The characteristics and advantages of the invention are clarified below by the detailed description of preferred embodiments of the invention, with reference to the accompanying drawings, in which:

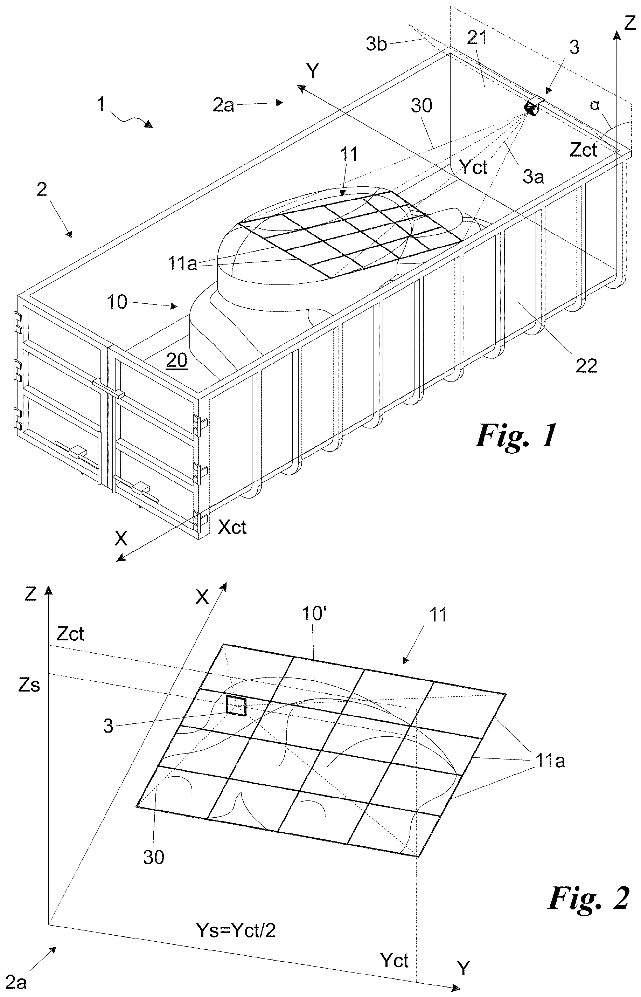

**Figure 1** shows a schematic perspective view of a system for monitoring the filling status of a waste container according to the invention, wherein the reference system applied to the container is indicated;
**Figure 2** illustrates a schematic perspective view of the reference system from the point of view of the sensor of a system for monitoring the filling status of a waste container according to the invention, wherein the grid made on the outline of the waste identified by the sensor is shown;

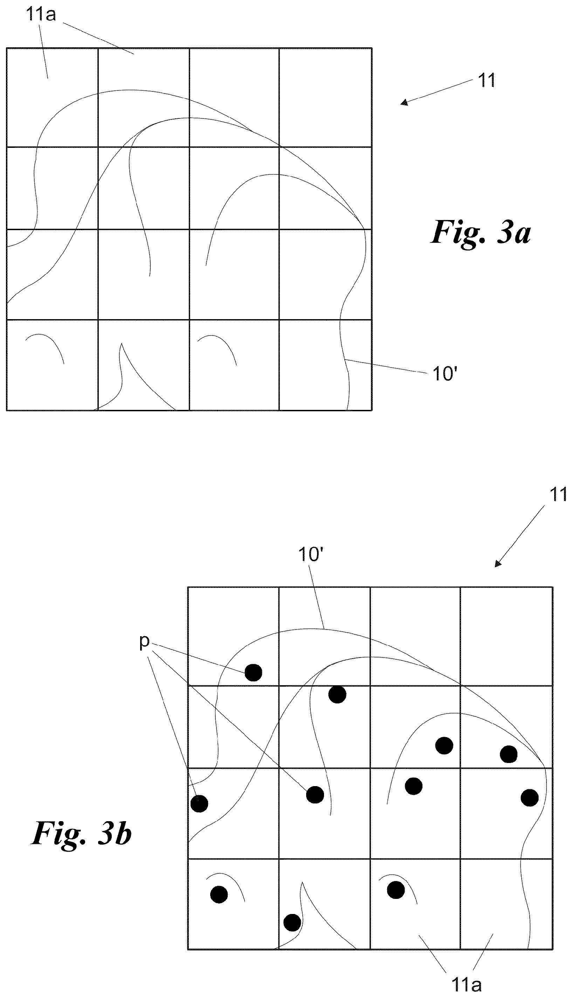

**Figure 3a** is a schematic two-dimensional transposition of the grid identified by the sensor as shown in Figure 2;
**Figure 3b** represents the grid of Figure 3 in which the point cloud identified by the system for calculating the volumes occupied by the waste is represented; and
**Figure 4** shows an example of calculation of the volumes relating to the waste based on the grid and the point cloud identified according to the two-dimensional transposition of Figure 3b.

In the present document, the measurements, values, shapes and geometric references (such as perpendicularity and parallelism), when associated with words such as "about" or other similar terms such as "approximately" or "substantially", are to be understood as excepting measurement errors or inaccuracies due to production and/or manufacturing errors and, above all, as allowing a slight deviation from the value, measurement, shape or geometric reference to which they are associated. For example, such terms, if associated with a value, preferably indicate a deviation not exceeding 10% of the value itself. Moreover, when used, terms such as "first", "second", "upper", "lower", "main" and "secondary" do not necessarily identify an order, a priority of relation or relative position, but may simply be used to more clearly distinguish different components from one another.

Unless otherwise specified, as results from the following discussions, it is considered that terms such as "processing", "computing", "determination", "calculation", or similar refer to the action and/or processes of a computer or similar electronic computing device that manipulates and/or transforms data represented as physical quantities, such as electronic quantities of registers of a computer system and/or memories into other data similarly represented as physical quantities within computer systems, registers or other storage, transmission or display devices.

The measurements and data reported in the present text are to be considered, unless otherwise indicated, as carried out in International Standard Atmosphere ICAO (ISO 2533:1975).

With reference to the Figures, the system for monitoring the filling status of a waste container according to the invention is globally denoted by the number **1.** The system 1 is substantially adapted to implement a method for monitoring the filling status of a waste container.

Therefore, the system 1 comprises means for implementing a method as described below.

In particular, the means may comprise one or more of a container **2** and a sensor **3.**

Obviously, the container 2 is a closed container. In particular, the container 2 is adapted to contain waste **10.**

The waste 10 may be of any type. Therefore, it may be waste of any material and/or shape or define other intrinsic characteristics of the waste 10.

The container 2 may be an enclosure forming part of a dustbin, therefore a fixed object normally located roadside or in an ecological island.

Or, the container 2 may consist of a container placed on a vehicle intended for waste collection. Therefore, clearly, the invention may comprise either a dustbin including the system 1, or a mobile vehicle including the system 1.

More in detail, the container 2 comprises at least, and is delimited by, a bottom wall **20.** The bottom wall 20 is substantially the wall at which the waste 10 introduced into the container 2 rests when deposited in support.

Moreover, the container 2 may also comprise, and is delimited by, a first lateral wall **21** and a second lateral wall **22.**

If present, preferably, the first lateral wall 21 and the second lateral wall 22 are mutually perpendicular. Moreover, preferably, the lateral walls 21, 22 are perpendicular to the bottom wall 20.

The sensor 3 is preferably of the optical type. For example, the sensor 3 may comprise a camera or a video camera or a laser or another instrument similar to these. Therefore, the sensor 3 is adapted to acquire an image 10' of the waste 10. Preferably, the sensor 3 is adapted to acquire a three-dimensional image 10' of the waste 10.

Thus, the sensor 3 defines a viewing cone **30.** The viewing cone 30 is substantially the region of three-dimensional space at which the sensor 3 is capable of detecting objects, in particular waste 10.

Thus, the viewing cone 30 is determined by the field of view of the sensor 3.

Still more in detail, the viewing cone 30 develops around an acquisition direction **3a.** The latter substantially defines the orientation of the sensor 3. Therefore, if the sensor 3 comprises, for example, a video camera or a laser, the aiming of the lens thereof defines the acquisition direction 3a.

The field of view is then defined with respect to the acquisition direction 3a. Thus, for example, if the field of view is configured within an angle of 45°, the viewing cone defines a vertex angle, i.e., an aperture, equal to 45° degrees.

Naturally, the viewing diameter of the viewing cone 30 changes with the variation of the distance between the sensor 3 and the object to be viewed.

The sensor 3 is preferably positioned on the first lateral wall 21.

Thus, if the first lateral wall 21 is flat or extends predominantly along a plane, the sensor 3 also defines an inclination plane 3b inclined with respect to the first lateral wall 21.

The inclination plane 3b is preferably determined perpendicularly to the acquisition direction 3a.

Furthermore, in detail, the inclination plane 3b is preferably inclined with respect to the first lateral wall 21 by an inclination angle **α** comprised between 20° and 40°. The method according to the invention is preferably implemented by a system 1 as described above.

The method therefore comprises at least one definition step.

In the definition step, a reference system **2a** is defined.

The reference system 2a is a system through which the method is capable of determining the overall volume of the waste 10 inside the container 2.

Therefore, the reference system 2a is preferably three-dimensional and integral with the container 2. Thus, the reference system 2a defines an abscissa **X,** a ordinate **Y** and a depth axis **Z.**

The abscissa X, the ordinate Y and the depth Z form the right-handed or left-handed set of three axes that forms the reference system 2a.

Preferably, the bottom wall 20 of the container 2 is aligned with a bottom plane **X, Y** formed by the abscissa X and the ordinate Y.

Similarly, if the first and the second lateral walls 21, 22 are present, the first lateral wall 21 is preferably aligned with a first lateral plane **Y, Z** defined by the ordinate Y and the depth Z, while the second lateral wall 22 is aligned with a second lateral plane **X, Z** defined by the abscissa X and the depth Z.

Thus, the sensor 3, when positioned on the first lateral wall 21, may in turn determine sensor coordinates **Xs, Ys, Zs** with respect to the reference system 2a. Moreover, if the sensor 3 is inclined, it defines an inclination angle α of the inclination plane 3b with respect to the first lateral plane Y, Z.

The method therefore comprises an acquisition step.

In the acquisition step, the image 10' is acquired by means of the sensor 3. Naturally, the image 10' is acquired within the viewing cone 30 which is defined by the field of view of the sensor in the reference system 2a.

Moreover, since the waste 10 is resting on the bottom wall 20, and the latter is aligned with the bottom plane X, Y, preferably the acquisition direction 3a is transverse to the bottom plane X, Y.

The method therefore comprises a scanning step.

In the scanning step, the image 10' is virtually scanned with a grid **11.** The grid 11 is substantially a digital, two-dimensional and flat object. Thus, the grid 11 is preferably transverse to the acquisition direction 3a, for example parallel to the bottom wall 20.

Thus, the scanning can essentially consist, in one example, in an action in which the waste 10 is struck by the grid 11 by translating the same along the depth Z and evaluating, from time to time, when the grid encounters waste 10.

The grid 11 preferably defines a plurality of zones **11a.**

The zones 11a are appropriately and neatly distributed within the grid 11. The grid 11 may for example be formed by a quadrangular element, for example a square, whose diagonals are defined by a section of the viewing cone 30, for example a cross section, possibly normal or inclined, with respect to the acquisition direction 3a. Thus, the zones 11a may be determined by quadrangular portions delimited by intersecting straight lines virtually present in the grid 11 and extending parallel to the sides of the grid 11 itself.

The method therefore comprises an identification step.

The identification preferably takes place during the scanning of the image 10'.

In fact, in the identification step, it is preferably provided to identify at least one contact point p, pi, pf for each zone 11a between the grid 11 and the image 10'. Naturally, the contact point **p, pi, pf** is identified when present. This means that if there is no waste 10 in a zone 11a of the grid 11, it is not possible to identify such contact points p, pi, pf.

In any case, the contact point p, pi, pf is identified in such a way as to define in said reference system 2a its own local coordinates **Xp, Xpi, Xpf, Yp, Ypi, Ypf, Zp, Zpi, Zpf.**

The local coordinates are nothing other than the coordinates of the contact point p, pi, pf in the reference system 2a, for each contact point p, pi, pf.

The method comprises a calculation step.

In the calculation step, the overall waste volume occupied by the waste 10 in the container 2 is calculated based on the contact points p, pi, pf with respect to the reference system 2a.

Since the waste 10, and therefore also the image 10', are three-dimensional objects, it is logical that in the identification step of the contact points p, pi, pf at least one initial contact point **p, pi** and one final contact point **p, pf,** that are adjacent, are identified. In other words, the scanning with the grid 11 of the image 10' makes it possible to identify at least two adjacent contact points p, pi, pf.

Thus, advantageously, the calculation step comprises some sub-steps.

In particular, the calculation step comprises a first sub-step in which at least one occupancy area **A** is calculated. The occupancy area A is preferably the area subtended by the initial contact point p, pi and the final contact point p, pf with respect to a reference axis **rif.**

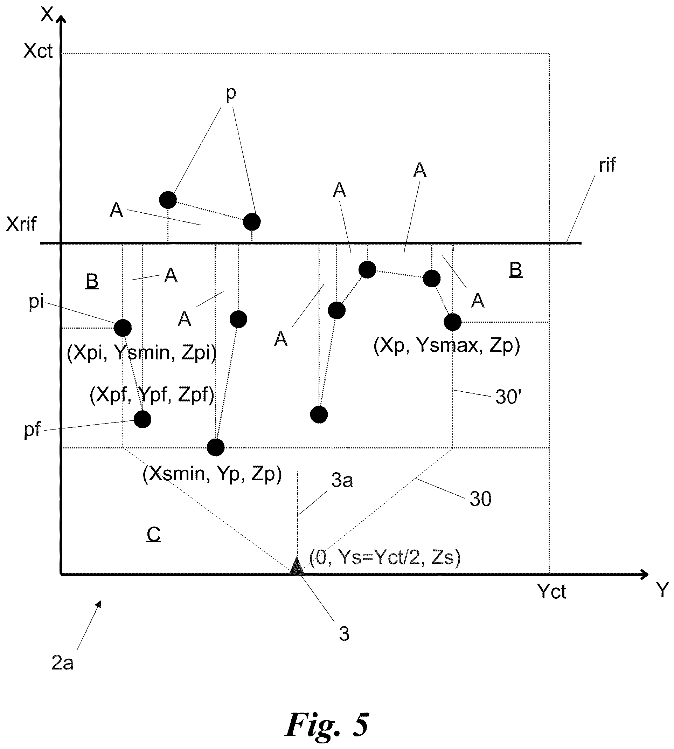

The reference axis rif preferably has reference coordinate **Xrif** and is appropriately defined parallel to the ordinate Y on the bottom plane X, Y. Thus, the reference axis rif defines the reference coordinate Xrif on the abscissa X. Moreover, for example, the reference axis rif may correspond to an axis passing through the middle of the container 2 along the abscissa X, as shown for example in Figure 5.

More in detail, in this step, the occupancy area A may be calculated as half the product of the distance, parallel to the ordinate Y, between the initial contact point p, pi and the final contact point p, pf and the sum of the distance, parallel to the abscissa X, between the initial contact point p, pi and the reference axis rif and parallel to the abscissa X, between the final contact point p, pf and the reference axis rif. In other words, the occupancy area A is the area defined by the trapezium having as vertices the initial and final contact points p, pi, pf and their respective projections parallel to the abscissa X onto the reference axis rif.

The calculation step therefore comprises a second sub-step.

In the second calculation sub-step, at least one estimated volume is preferably calculated.

The estimated volume is advantageously given by the product of the occupancy area A and a height defined by the average between a local depth coordinate Zp, Zpi of the initial contact point p, pi and a local depth coordinate Zp, Zpf of the final contact point p, pf. Therefore, in other words, the volume of the trapezoidal-base parallelepiped corresponding to the occupancy area A is calculated, and an intermediate height between the heights of the adjacent initial and final contact points p, pi, pf.

Thus, at the end of the calculation step, the overall waste volume includes, or is constituted by, at least the estimated volume.

Naturally, the calculation can be further refined.

For example, if a plurality of adjacent pairs of initial and final contact points p, pi, pf are identified in the identification step, the calculation step comprises calculating a plurality of occupancy areas A from each pair and, therefore, a plurality of estimated volumes from each occupancy area and relative pair.

In this case, therefore, preferably and appropriately, the overall waste volume is determined as the sum of the estimated volumes.

In a further preferred embodiment of the invention, the container 2 defines in the reference system 2a its own container coordinates **Xct, Yct, Zct.**

Thus, the container 2 may further define a container area **Xct, Yct** on the bottom plane X, Y. The container area **Xct, Yct** is given by the area defined by the container in the reference system 2a which, however, may not be entirely controllable by the sensor 3.

In fact, the sensor 3 defines said acquisition direction 3a inclined toward the bottom plane X, Y so that the viewing cone 30 defines on the bottom plane X, Y a viewing area 30'.

The viewing area 30' is accessible by the sensor 3, but preferably does not correspond to the entire container area Xct, Yct.

Thus, the viewing area 30' is delimited on the bottom plane X, Y by delimiting coordinates **Xsmin, Xsmax, Ysmin.**

Therefore, in the calculation step, a compensation volume is further calculated around the viewing area 30'.

Advantageously, the compensation volume is calculated as the sum of the volumes of pyramids having as their base respective areas B, C complementary to the viewing area 30' with respect to the container area Xct, Yct and as their height a local depth coordinate Zp of a contact point p nearest to each respective complementary area B, C.

The compensation areas B, C, as shown in Figure 5, are just rectangles or strips of the container area Xct, Yct outside the viewing area 30'.

Thus, the compensation volumes take into account the fact that the sensor 3 does not have full visibility of the container 2.

Therefore, advantageously, the overall waste volume includes, in this case, at least the sum of at least one estimated volume, possibly the sum of the estimated volumes, with the compensation volume.

The method may also take into account further variables that impact the estimation of the overall waste volume.

For example, in the calculation step, the overall waste volume may be multiplied by a predetermined correction factor. The latter, if considered, is preferably proportional to at least the container coordinate Xct relative to the abscissa X.

Moreover, the method may comprise other correction factors.

For example, the method may comprise a correction that varies depending on the type of waste 10 present in the container 2.

Thus, the method may comprise, for example, a formation step in which a digital database is formed in which a numerical weight parameter is associated with materials and/or shapes of waste 10 of different types.

The method may therefore also comprise a recognition step in which the waste is recognised so that the material and/or shape of the waste is determined by the sensor 3, preferably through the image 10'.

Moreover, the method comprises a recall step. In the recall step, the numerical weight parameter associated with the recognised material and/or shape is preferably recalled.

Thus, in the calculation step, the overall waste volume may be multiplied by the numerical weight parameter.

Naturally, in any case, once the calculation of the overall waste volume has been carried out, the method preferably comprises a comparison step.

In the comparison step, preferably, the overall waste volume is compared with a predetermined threshold value. The predetermined threshold value may consist, for example, of a percentage volumetric value of the total volume of the container 2, easily obtainable from the container coordinates Xct, Yct, Zct.

Thus, the predetermined threshold value allows to obtain an indication about the filling status of the container 2.

In conclusion, the method comprises an issuing step.

In the issuing step, a warning is issued when the overall waste volume reaches and/or exceeds the predetermined threshold value.

The method just described may be implemented in real time, at a defined frequency. For example, it may be configured to be executed at predetermined time intervals. Moreover, the method may comprise a notification step, in which the difference between the overall waste volume and the predetermined threshold value is notified so as to inform an operator about the status of the container 2.

Evidently, the method is adapted to be executed cyclically so as to continuously monitor the filling status of the container 2.

Being the method preferably implemented by a computer, i.e., by an electronic processor, it also comprises other elements.

In particular, the invention comprises a new computer program comprising instructions which, when the program is executed by the computer, enable the computer to perform a method as previously described.

Moreover, the invention also comprises a computer-readable storage medium comprising instructions which, when executed by the computer, enable the computer to perform a method as previously described.

The system 1, and the related method, for monitoring the filling status of a waste container according to the invention achieve important advantages.

Indeed, the system 1 and the method for monitoring the filling status of a waste container allow to reduce the number of components required for monitoring the container 2 and thus the overall cost of the system.

Moreover, the system 1 and the method for monitoring the filling status of a waste container allow to increase the accuracy in the assessment of the filling status of the container 2 despite the aforementioned low complexity of the system 1.

In particular, the system 1 allows to obtain a precise indication of the overall waste volume even if the sensor 3 has a limited field of view which does not allow it to scan the entire container 2.

The invention is susceptible to variations falling within the scope of the inventive concept defined by the claims.

Within said scope, all details may be replaced by equivalent elements and the materials, shapes and dimensions may be any.

## Claims

1. Computer-implemented process of monitoring the filling status of a waste container including:
- defining a three-dimensional reference system (2a), defining an abscissa (X), a ordinate (Y) and a depth (Z), integral with a waste container (2) containing waste (10) and delimited by at least one bottom wall (20) aligned with a bottom plane (X, Y) defined by said abscissa (X) and said ordinate (Y);
- acquiring a three-dimensional image (10') of said waste (10) by an optical sensor (3) within a viewing cone (30) developing around an acquisition direction (3a) transverse to said bottom plane (X, Y) and defined by a field of view of said sensor (3) in said reference system (2a);
- virtually scanning said image (10') with a digital, two-dimensional, flat grid (11) transverse to said acquisition direction (3a) defining a plurality of zones (11a) distributed neatly in said grid (11);
- identifying, when present, at least one point of contact (p, pi, pf) for each said area (11a) between said grid (11) and said image (10') such that said contact point (p, pi, pf) defines on said reference system (2a) its own local coordinates (Xp, Xpi, Xpf, Yp, Ypi, Ypf, Zp, Zpi, Zpf);
- calculating the overall waste volume occupied by said waste (10) in said container (2) based on said contact points (p, pi, pf) with respect to said reference system (2a);
- comparing said overall waste volume with a predetermined threshold value;
- issuing a warning when said overall waste volume reaches and/or exceeds said predetermined threshold value;
and **characterised in that**
- at least one initial contact point (p, pi, pf) and one final contact point (p, pf) adjacent to each other are identified among said contact points (p, pi, pf) in said identification step, and
- said calculation step includes at least:
- calculating at least one area of occupancy (A) subtended by said initial contact point (p, pi) and final contact point (p, pf) with respect to a reference axis (rif) of reference coordinate (Xrif) and defined parallel to said ordinate (Y) on said bottom plane (X, Y), and
- calculating at least an estimated volume given by the product of said occupancy area (A) and height defined by the average of one of said local depth coordinate (Zp, Zpi) of said initial contact point (p, pi) and one of said local depth coordinate (Zp, Zpf) of said final contact point (p, pf);
- said volume including at least said estimated volume.

2. Process according to claim 1, wherein in said identification step a plurality of pairs of said adjacent initial contact point (p, pi) and final contact point (p, pf) are identified and said calculation step includes calculating a plurality of said occupation areas (A) from each said pair and a plurality of said estimation volumes from each said occupation area (A) and said relative pair; said overall waste volume being determined as the sum of said estimation volumes.

3. Process according to any of the preceding claims, wherein said container (2) defines on said reference system (2a) its own container coordinates (Xct, Yct, Zct) delimiting at least one container area (Xct, Yct) on said bottom plane (X, Y); wherein said sensor (3) defines said acquisition direction (3a) inclined toward said bottom plane (X, Y) such that said viewing cone (30) defines on said bottom plane (X, Y) a viewing area (30') accessible by said sensor (3), less than said container area (Xct, Yct) and delimited on said bottom plane (X, Y) by delimiting coordinates (Xsmin, Xsmax, Ysmin); and wherein in said calculation an offsetting overall waste volume is further calculated determined around said viewing area (30') as the sum of the volumes of pyramids having as their base respective complementary areas (B, C) to said viewing area (30') with respect to said container area (Xct, Yct) and as their height a local depth coordinate (Zp) of a said contact point (p) nearest to each respective said complementary area (B, C); said volume including at least the sum of said at least one volume estimated with said offsetting volume.

4. Process according to any of the preceding claims, wherein in said calculation step, said overall waste volume is multiplied by a predetermined correction factor proportional to at least said container coordinate (Xct) relative to said abscissa (X).

5. Process according to any of the preceding claims, including:
- forming a digital database in which a numerical weight parameter is associated with materials and/or shapes of said waste (10) of different types;
- recognizing said waste (10) in such a way as to determine said material and/or form of said waste by said sensor (3);
- recalling said numerical weight parameter associated with said recognized material and/or shape; and
- in said calculation step, multiplying said overall waste volume by said numerical weight parameter.

6. System (1) for monitoring the filling status of a waste container comprising means for implementing a process according to any of the preceding claims.

7. System (1) according to the preceding claim, wherein said container (2) comprises at least a first lateral wall (21), aligned with a first lateral plane (Y, Z) defined by said ordinate (Y) and said depth (Z), and a second lateral wall (22), aligned with a second lateral plane (X, Z) defined by said abscissa (X) and said depth (Z), mutually perpendicular and perpendicular to said bottom wall (20); and said sensor (3) is positioned on said first lateral wall (21) so as to determine sensor coordinates (Xs, Ys, Zs) with respect to said reference system (2a), defines an inclination plane (3b) perpendicular to said acquisition direction (3a) inclined with respect to said first lateral plane (Y, Z) by an inclination angle (α) comprised between 20° and 40°.

8. Vehicle comprising a system (1) according to any of claims 6-7.

9. A computer program comprising instructions which, when said program is executed by said computer, enable said computer to perform a process according to any of claims 1-5.

10. Computer-readable storage medium comprising instructions that, when executed by said computer, enable said computer to perform a process according to any of claims 1-5.
